# EUROPEAN PATENT APPLICATION

(11) **EP 2 061 217 A2**
(43) Date of publication of application: **20.05.2009**
(21) Application number: 08160092.6
(22) Date of filing: 10.07.2008
(51) Int. Cl.: H04M 1/00

(54) **Terminal with call transfer function**

(30) Priority: 14.11.2007 CN 200710124539
(71) Applicant: Shenzhen Taifeng Network Technology Co., Ltd., Shenzhen (CN)
(72) Inventor: Shao, Hua, Zone of Nantou Nanshan Dist.,Shenzhen (CN)
(74) Representative: Scheffler, Marco

(57) **Abstract**

The present invention discloses a terminal with call transfer function. The terminal includes a wired communication unit (17), a wireless antenna (11), a wireless exchange unit connected to the wireless antenna, a customer identity recognition unit (12) connected to the wireless exchange unit, a micro processor (16) connected to the wireless exchange unit and the wired communication unit, and a call transfer controlling unit (14) connected to the wireless exchange unit, the wired communication unit and the micro processor. The terminal integrates the wireless antenna, the wireless exchange unit, the customer identity recognition unit, the wired communication unit, the call transfer controlling unit, and the micro processor together. The terminal transfers call between wired network and wireless mobile network, and thus reduces cost that customers have to pay for having the function of call transfer.

## Description

### Field of the Invention

The present invention relates to communication devices and, more especially to a terminal with call transfer function.

### Background

In current call business managed by the telecom operators, two sides of a call are a caller side and a customer side. On one hand, when the caller side is making a call, it exists always various kinds of unreachable conditions, for example, when the customer is busy, out, or has no response to the call for a long time, thereby resulting in a low success rate of calling. On the other hand, the customer usually owns more than one telephone number, such as office telephone number, home telephone number, mobile telephone number and so on. Sometimes, the caller may try and dial different numbers of the customer for many times. Generally, the caller rarely remembers all telephone numbers of a called customer. As a result, most of calling exhibits lower efficiency and lower success rate. The telecom operators have to suffer loss in telephone business. To the telecom operators, this loss of telephone business means that income from telecom fees is reduced. To the customers, missed calls will cause some important affair and business being delayed, thereby unduly losing some benefits.

Therefore, the telecom operators offer call transfer (i.e., call forwarding) business to customers. Currently, most of the telephones support the transfer business. When a customer register the transfer service by some telephone number (e.g. his home phone number), the telecom operators will monitor all incoming calls of the registered telephone number. When the telecom operators detect that there are incoming calls for the registered telephone number, the incoming calls will be transferred to the appointed or destination phone number set before, such as a mobile telephone number of the customer, to realize the call transfer (i.e. forwarding) function. However, the customer should pay much expense to operators for enjoying this transfer service and once the customer opens this transfer service, it can not be ended until the customer cancels it by manual way.

### Summary

It is therefore an object of the present invention to provide a terminal with call transfer function for solving the problem that the present call transfer function needs to be implemented by the telecom operators and the customers have to pay more to the owner of this function.

A terminal with call transfer function comprises a wired communication unit, a wireless antenna, a wireless exchange unit, a customer identity recognition unit, a micro processor, and a call transfer controlling unit. The wired communication unit transmits analog telephone signals to the wired network, and receives analog telephone signals from the wired network. The wireless antenna transfers digital telephone signals with a wireless mobile network. The wireless exchange unit is connected to the wireless antenna. The wireless exchange unit is adapted (e.g., configured, structured or arranged) for processing and converting analog telephone signals into digital telephone signals which are sent to the wireless mobile network via the wireless antenna, receiving digital telephone signals sent by the wireless antenna, processing and converting the digital telephone signals into analog signals, and exporting the analog signals. The customer identity recognition unit is connected to the wireless exchange unit. The customer identity recognition unit is adapted for storing customer information. The micro processor is connected to the wireless exchange unit and the wire communication unit. The micro processor is adapted for detecting a presence of the call transfer condition, determining whether to transfer the call according to the detection result, and controlling transmission of telephone signals between the wireless exchange unit and the wired communication unit. The call transfer controlling unit is connected to the wireless exchange unit, the wired communication unit and the micro processor. The call transfer controlling unit is adapted for transferring signals between the wireless exchange unit and the wired communication unit.

According to the embodiment of the present invention, the terminal integrates the wireless antenna, the wireless exchange unit, the customer identity recognition unit, the wired communication unit, the call transfer controlling unit, and the micro processor together. Thus, the terminal transfers a call between wired network and wireless mobile network. This reduces the expense that customers have to pay for utilizing the function of call transfer.

Other objects, advantages and novel features of the present invention will become more apparent from the following detailed description when taken in conjunction with the accompanying drawings, in which:

### Brief Description of the Drawings

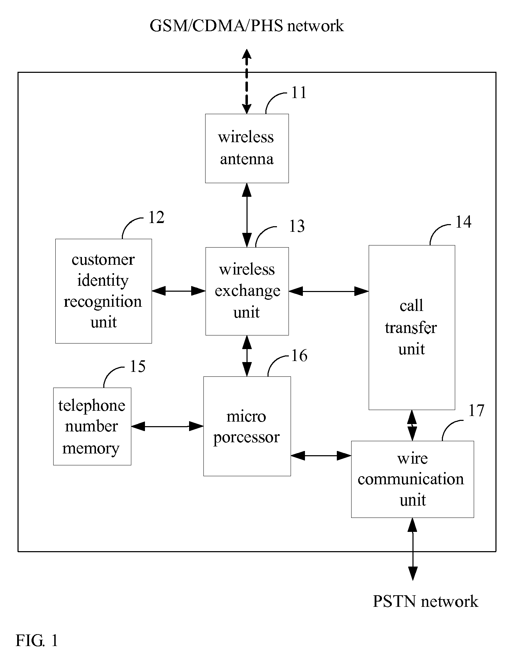

FIG.1 is a block diagram showing functional structure of a terminal with call transfer function, according to an embodiment of the present invention.

### Detailed Description

Embodiments of the present invention will be explained below in detail with reference to the accompanying drawings. However, configuration having the same functions among the embodiments will be assigned the same reference numerals and overlapping explanation will be omitted. The following description of the preferred embodiment(s) is merely exemplary in nature and is no way intended to limit the invention, its application, or uses.

According to the embodiment of the present invention, the present terminal could be equipment that is independent of the telephone terminal, or otherwise be built in the telephone terminal.

In certain embodiments of the present invention, wireless mobile network may be Global System for Mobile (hereinafter, GSM) communications network, Code Division Multiple Access (hereinafter, CDMA) network, Personal Handyphone System (hereinafter, PHS) network, Wideband Code Division Multiple Access (hereinafter, WCDMA) network, Time Division - Synchronous Code Division Multiple Access (hereinafter, TD - SCDMA) network or CDMA2000 and so on. The work frequency band of wireless mobile network may include GSM850MHz, GSM900MHz, GSM1800MHz, GSM1900MHz, CDMA450MHz, CDMA800MHz or PHS1900 MHz, and so on.

FIG. 1 shows functional relationship between parts of the wireless cordless telephone terminal according to an embodiment of the present invention. For the purpose of explaining clearly, correlative parts of embodiment are shown in FIG. 1.

The wireless exchange unit 13 and the wired communication unit 17 of the terminal separately detect incoming call signals in wireless mobile network and wired network by the wireless antenna 11 and the wired port, respectively. When an incoming call is detected, the micro processor 16 begins to detect and judge whether the call transfer condition is present (i.e., satisfied). When the call transfer condition is present and comes from the wired network, the micro processor 16 reads a transfer destination telephone number from a telephone number memory 15, processes and sends the transfer destination telephone number to the wireless exchange unit 13. The wireless exchange unit 13 reads customer information (e.g., Personal identification number (PIN), International Mobile Subscriber Identity (IMSI), Identification Key (KI), authentication and encryption algorithm, Local Area Identifier (LAI), Temporary Mobile Station Identity (TMSI), forbidden accessing public telephone network identity) stored in the customer identity recognition unit 12, processes (e.g., identifies, authenticates, decodes, decrypts) analog data signals received by the micro processor 16, including the transfer destination telephone number and so on, converts the analog data signals into digital data signals and exports the digital data signals. The wireless antenna 11 transmits the digital data signals to the wireless communication network, thereby sending a call to the call transfer destination.

When the call transfer destination takes response to the call, under the controlling of the micro processor 16, the call transfer controlling unit 14 sends the analog telephone signals (i.e., analog phonetic signals, analog data signals, etc) received by the wired communication unit 17 to the wireless exchange unit 13 via difference paths. The wireless exchange unit 13 reads customer information stored in the customer identity recognition unit 12, processes (e.g., identifies, authenticates, decodes, decrypts) analog data signals (i.e., analog phonetic signals, analog data signals, etc) according to customer information stored in the unit 12, converts the analog data signals into digital telephone signals (i.e., digital phonetic signals, digital data signals, etc) and exports the digital telephone signals. The wireless antenna 11 transmits the digital telephone signals to the wireless mobile network, thereby sending a call to the called customer and completing the communication between the caller and the call transfer destination.

When the incoming call meets with the call transfer condition and comes from the wireless mobile network, the micro processor 16 reads a transfer destination telephone number from the telephone number memory 15, processes and sends the transfer destination telephone number to the wired communication unit 17. The wired communication unit 17 sends a call to the call transfer destination via wired network. When the call transfer destination takes response to the call, the wireless exchange unit 13 reads customer information stored in the customer identity recognition unit 12, processes (e.g., identifies, authenticates, decodes, decrypts) digital telephone signals (i.e., digital phonetic signals, digital data signals, etc) received by the wireless antenna 11 according to customer information stored in the unit 12, converts the digital telephone signals into analog telephone signals (i.e., analog phonetic signals, analog data signals, etc) and sends the converted signals into the call transfer controlling unit 14. The call transfer controlling unit 14 sends analog telephone signals to the wired communication unit 17 via difference paths under controlling of the micro processor 16. The wired communication unit 17 sends the analog telephone signals to the wired network, thereby sending a call to the call transfer destination.

In above-described process, the micro processor 16 will fetch another number to make a call if no one takes response to the call during a first call transfer. As long as the caller doesn't stop calling, the call transfer process won't cease until one call transfer destination takes response to the call.

In some embodiments, the call transfer condition may be ring time, calling time, calling engaged, and so on. The micro processor 16 detects and judges the calling transfer condition using counter and calculagraph and so on.

In other embodiments, the telephone number memory 15 may be an equipment that is independent of the telephone terminal, or otherwise is built in the micro processor 16. The telephone number stored in the telephone number memory 15 may be one or more. When there is more than one telephone number stored, one of the same network telephone numbers to the caller number is served as the preferred call transfer destination telephone number. In this condition, the telecom cost is the lowest. Specifically, if no response to the calling, the call transfer destination costumer needs no payment for call transfer. The telephone numbers in a network different from the caller number could be served as the subordination call transfer destination telephone numbers. The subordination numbers will be called when no one replies the preferred call transfer destination telephone number. In this condition, the customer needs to pay the cross network fee.

Further, the customer can input call transfer destination telephone numbers to the telephone number memory 15 through telephone terminal data information input unit such as keystroke. The call transfer destination telephone numbers can be arranged according to inputting time, and read in this arrangement turn when the terminal transfers the incoming call.

In one embodiment, if the wireless mobile network supported by the present terminal is GSM, the customer identity recognition unit 12 is Subscriber Identity Module (SIM) card. If the wireless mobile network is CDMA, PHS, WCDMA, TD-SCDMA or CDMA2000 and so on, the customer identity recognition unit 12 is User Identity Module, a card or a module which can be a software, a hardware or a combination of software and hardware.

It is to be noted that, every unit of the terminal as described above, except of the call transfer controlling unit, can be implemented by an existing circuit part or a chip. Alternatively, these existing units can be improved or integrated for use in the present telephone terminal. For example, integration of related units into a chip can reduce impropriate area and material cost.

According to the embodiment of the present invention, the terminal integrates the wireless antenna, the wireless exchange unit, the customer identity recognition unit, the wired communication unit, the call transfer controlling unit, the telephone number memory and the micro processor together. Thus, the terminal transfers call between wired network and wireless mobile network, thereby decreasing the telecom cost that customers have to pay for having the function of call transfer. Additionally, the customers need not to proceed any actions with the telecom operators for opening and closing the call transfer function, since the call transfer function is self-fulfillment in the terminal.

Those skilled in the art can now appreciate from the foregoing description that the broad teachings of the present invention can be implemented in a variety of forms, Therefore, while this invention has been described in connection with particular examples thereof, the true scope of the invention should not be so limited since other modification will become apparent to the skilled practitioner upon a study of the drawings, the specification and the claims.

## Claims

1. A terminal with call transfer function, comprising:
a wired communication unit (17) for sending analog telephone signals to the wired network, the wired communication unit being adapted for receiving analog telephone signals from the wired network;
a wireless antenna (11) adapted for receiving digital telephone signals from a wireless mobile network and adapted for transmitting digital telephone signals to the wireless mobile network;
a wireless exchange unit (13) connected to the wireless antenna, the wireless exchange unit being adapted for processing and converting analog telephone signals into digital telephone signals, which are sent to the wireless mobile network via the wireless antenna, receiving digital telephone signals sent by the wireless antenna, processing and converting the digital telephone signals into analog signals, and exporting the analog signals;
a customer identity recognition unit (12) connected to the wireless exchange unit, the customer identity recognition unit being adapted for storing customer information;
a micro processor (16) connected to the wireless exchange unit and the wired communication unit, the micro processor being adapted for detecting the presence of a call transfer condition, determining whether to transfer the call according to the detected result, and controlling transmission of telephone signals between the wireless exchange unit and the wired communication unit; and
a transfer controlling unit (14) connected to the wireless exchange unit, the wired communication unit and the micro processor, the call transfer controlling unit being adapted for transferring signals between the wireless mobile network and the wired communication unit.

2. The terminal of claim 1, wherein the wireless mobile network is selected from the group consisting of: GSM, CDMA, PHS, WCDMA, TD-SCDMA, and CDMA2000 network.

3. The terminal according to one of the preceding claims, wherein the call transfer condition is selected from the group consisting of: ring time, calling time and calling engaged.

4. The terminal according to one of the preceding claims, further comprising: a telephone number memory connected to the micro processor, the telephone number memory being adapted for storing one transfer destination telephone number or more than one transfer destination telephone numbers.

5. The terminal according to one of the preceding claim, wherein the terminal is a telephone terminal.
